# EUROPÄISCHE PATENTSCHRIFT

(11) **EP 0 928 776 B1**
(45) Veröffentlichungstag und Bekanntmachung des Hinweises auf die Patenterteilung: **19.03.2003**
(21) Anmeldenummer: 98124781.0
(22) Anmeldetag: 29.12.1998
(51) Int. Cl.: C02F 1/50, C02F 1/66

(54) **Verfahren zur Verminderung des Algenwachstums in natürlichen oder künstlich angelegten Gewässern**
Method to lower the growing of algae in natural or artificial waters
Procédé pour diminuer la croissance des algues dans les plans d'eau naturels ou artificiels

(30) Priorität: 09.01.1998 AT 1698
(43) Veröffentlichungstag der Anmeldung: 14.07.1999
(73) Patentinhaber: Biotop Landschaftsgestalltung Ges.m.b.H, 3411 Weidling (DE)
(72) Erfinder: Petrich, Peter, Dipl.-Ing., 1200 Wien (AT)
(74) Vertreter: Vinazzer, Edith, Dipl.-Ing.

(56) Entgegenhaltungen:
- BE-A- 887 754
- CH-A- 562 556
- JP-A- 6 014 676
- JP-A- 7 206 558
- JP-A- 7 206 562
- US-A- 3 756 220
- US-A- 4 670 148

## Beschreibung

Die Erfindung betrifft ein Verfahren zur Verminderung des Algenwachstums in natürlichen oder in künstlich angelegten Gewässern, wie Seen, Teichen, Weihern oder Schwimmbecken, durch Einbringen von CO₂. Die Erfindung betrifft ferner eine Vorrichtung zur Durchführung des Verfahrens.

In natürlichen und in künstlich angelegten Gewässern tritt häufig verstärktes Algenwachstum auf. Der Grund dafür liegt meist in der Anreicherung von Pflanzennährstoffen, insbesondere Stickstoff und Phosphor. Deshalb werden heute große Anstrengungen unternommen, diese Nährstoffe von Gewässern fern zu halten.

In vielen Gewässern kann man jedoch trotz niedriger Konzentration dieser Nährstoffe starke Algenentwicklung beobachten. So liegt zum Beispiel bei der Algenart *Asterionella formosa* die optimale Phosphorkonzentration für das Wachstum bei 2 µg/l, dieser Wert ist so niedrig, dass er in Gewässern kaum zu erreichen ist.

Meist ist in algenreichen Gewässern das Wachstum von Wasserpflanzen, die das Algenwachstum hemmen könnten, sehr gering. Zugleich ist fast immer ein hoher pH-Wert im Wasser festzustellen. Bei einem hohen pH-Wert finden Algen besonders gute Lebensbedingungen, während Wasserpflanzen, die in Nährstoffkonkurrenz zu den Algen leben, niedrigere pH-Werte bevorzugen. Um die Lebensbedingungen für die Wasserpflanzen zu verbessern und gleichzeitig für die Algen zu verschlechtern, versucht man daher auch, den pH-Wert im Wasser zu senken. Das geschieht in der Regel durch Zugabe von Mineralsäuren, wie zum Beispiel Salzsäure oder Schwefelsäure. Die Zugabe dieser Säuren ist jedoch problematisch, da diese einerseits eine erhebliche Umweltbelastung darstellen und andererseits deren Anwendung material- und kostenaufwendig ist.

Es ist nun bereits in der WO 93/21115 vorgeschlagen worden, die Wasserqualität von stehenden oder langsam fließenden Gewässern dadurch zu verbessern, dass CO₂ eingeleitet wird, um den pH-Wert des Gewässers in einem solchen Bereich einzustellen, dass Algenwachstum verhindert wird. Dabei wird allgemein vorgeschlagen, technisch hergestelltes CO₂-Gas mittels geeigneter Vorrichtungen, beispielsweise über Zerstäuber oder Düsen, und in geeigneter Form, beispielsweise mit Luft vermengt oder in wässriger Lösung, in das Gewässer einzubringen. Ein Verfahren, das es gestatten würde, mit vertretbarem oder sogar geringem Aufwand die erforderlichen Mengen an CO₂ zur Verfügung zu stellen, kann dieser Druckschrift jedoch nicht entnommen werden.

Die Erfindung hat sich daher die Aufgabe gestellt, ein einfaches und umweltfreundliches Verfahren zur Reduktion des Algenwachstums in Gewässern unter Verwendung von CO₂ vorzuschlagen.

Gelöst wird die gestellte Aufgabe erfindungsgemäß dadurch, dass im gewässernahen Boden oder in gewässernahen Kompostmieten mittels eines Sammelsystems CO₂ enthaltende Lust aus dem Boden oder aus dem Kompostmieten angesaugt wird, welche Luft dem zu behandelnden Wasser zugeführt und mit diesem vermischt wird.

Das gemäß der gegenständlichen Erfindung vorgeschlagene Verfahren nützt daher vor Ort vorhandene Ressourcen aus und ist somit einfach und zugleich ausgesprochen umweltfreundlich. Zur Absenkung des pH-Wertes im Wasser zur Reduktion des Algenwachstums wird bei der einen erfindungsgemäßen Lösung der Umstand ausgenutzt, dass der CO₂-Partialdruck der Bodenluft je nach Standort bis zu zweihundert Mal höher ist als der CO₂-Partialdruck der Atmosphäre von 0,03 %. Der CO₂-Partialdruck ist in der Bodenluft deshalb so hoch, weil CO₂ bei der Wurzelatmung und der Atmung der Bodenorganismen erzeugt wird und der Gasaustausch mit der Atmosphäre verzögert ist. Auf diese Weise werden in Waldund Kulturland im Durchschnitt ca. 8000 kg CO₂ pro Hektar und Jahr freigesetzt. Ein weiterer wesentlicher Vorteil dieser erfindungsgemäßen Lösung besteht darin, dass der CO₂-Partialdruck der Bodenluft genau so hoch ist, dass sich im Wasser der optimale pH-Wert einstellt, so dass auf Dosierungseinrichtungen weitgehend verzichtet werden kann und eine Überdosierung ausgeschlossen werden kann.

Darüber hinaus ist die CO₂-Produktion im Boden genau dann am höchsten, wenn auch der CO₂ Verbrauch im Gewässer am höchsten ist, nämlich im Sommer. Gleichzeitig werden durch die Anwendung die Wasserpflanzen mit CO₂ gedüngt und damit in ihrer wasserreinigenden Wirkung gefördert. Der technische Aufwand ist durch die Ausnutzung der natürlichen CO₂-Produktion insgesamt sehr gering. Der Aufwand ist auch bei der zweiten Variante der Erfindung, wo der Umstand genutzt wird, dass in Kompostmieten durch die Atmungstätigkeit der Bodenorganismen, die die organischen Verbindungen der Bioabfälle mineralisieren, die CO₂-Konzentration besonders hoch ist, gleichermaßen gering.

Das erfindungsgemäße Verfahren ist in der praktischen Anwendung besonders einfach durchführbar, indem die Luft aus dem Boden oder aus Kompostmieten mittels gelochter Drainagerohre oder -schläuche angesaugt und anschließend mit dem zu behandelnden Wasser vermischt, insbesondere in dieses eingeblasen, wird, wodurch sich das CO₂ im Wasser löst und der pH-Wert abgesenkt wird.

Die Durchführung des erfindungsgemäßen Verfahrens ist sehr einfach, da die Luft mit einer geeigneten Pumpe, beispielsweise einer motorbetriebenen Luftpumpe oder einer Wasserstrahlpumpe gefördert werden kann. Dabei kann das Einbringen der Luft in das Gewässer vorteilhafterweise auch durch solarbetriebene Pumpen im Direktantrieb erfolgen, da der CO₂ Bedarf nur bei Tageslicht gegeben ist.

Bei einer besonders vorteilhaften Variante des erfindungsgemäßen Verfahrens wird die Luft in das Gewässer direkt eingebracht. Dadurch kann der erforderliche technische Aufwand besonders gering gehalten werden.

Eine andere Variante des erfindungsgemäßen Verfahrens sieht vor, dass die Luft außerhalb des Gewässers mit dem zu behandelnden Wasser gemischt wird. In Abhängigkeit von der jeweiligen Anlage des Gewässers oder auch bei Schwimmteichen und Schwimmbecken kann es von Vorteil oder auch erwünscht sein, keine Leitungen, Pumpen oder dergleichen im Gewässer selbst unterzubringen.

Um den Lösungsgrad des CO₂ im Gewässer zu erhöhen, kann entweder das Gegenstromprinzip angewendet werden, das heißt, dass zugeführte CO₂-reiche Luft und CO₂-armes Wasser in entgegengesetzte Richtungen strömen und sich dabei vermischen, oder es können Turbulenzen bzw. turbulente Strömungen im Wasser erzeugt werden.

Bei einer weiteren, sehr einfach durchzuführenden Maßnahme zur Verbesserung des Lösungsgrades ist vorgesehen, im Gewässer das Aufsteigen der zugeführten CO₂-reichen Luft zu verlangsamen, was beispielsweise durch den Einbau von treppenartig angeordneten Hindernissen oder durch das Vorsehen von porösen Körpern, wie Kiesschüttungen, Schwämmen oder dergleichen, durchgeführt wird.

Die erfindungsgemäße Vorrichtung zur Durchführung des Verfahrens umfasst ein im Boden und / oder in den Kompostmieten verlegbares Luftsammelsystem, welches insbesondere aus gelochten Drainageschläuchen oder -röhren besteht, zumindest eine Pumpe sowie Leitungsschläuche oder -rohre zum Einbringen bzw. Verteilen der CO₂-reichen Luft im Gewässer und im Gewässer verlegbare Linien belüfter, insbesondere in Form von gelochten Rohren oder Schläuchen, und/oder poröse Ausströmkörper, beispielsweise poröse Steine oder dergleichen. Die erfindungsgemäße Vorrichtung ist daher sehr einfach aufgebaut, lässt sich einfach verlegen und erfordert nur einen geringen technischen Aufwand, wobei eine gute Verteilung der dem Gewässer zugeführten CO₂-reichen Luft erfolgt.

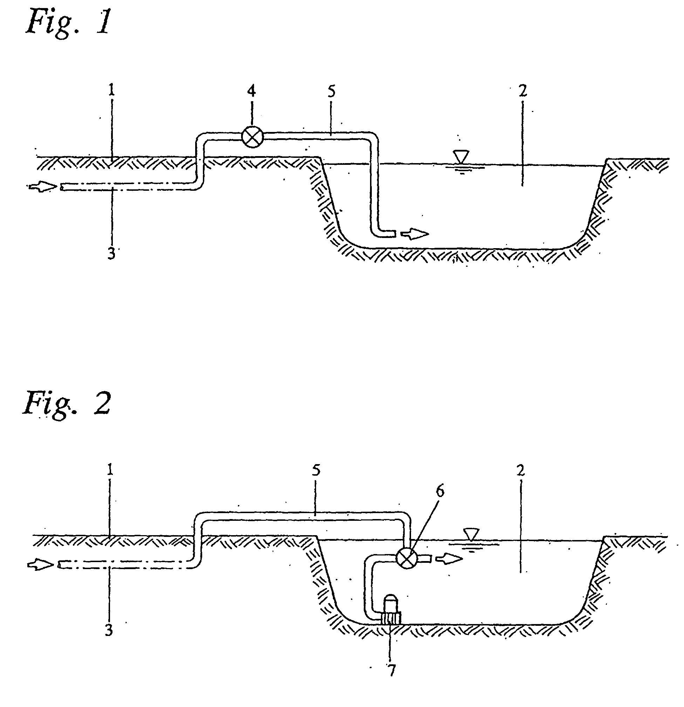

Die Erfindung wird anhand der Zeichnung, die zwei Ausführungsbeispiele darstellt, näher beschrieben. Die beiden Zeichnungsfiguren, Fig.1 und Fig.2, sind dabei schematische Darstellungen und veranschaulichen die Wirkungsweise der gegenständlichen Erfindung anhand von Schnitten durch ein Gewässer und dessen unmittelbare Umgebung.

Bei beiden Ausführungsformen wird im Boden 1 außerhalb des behandelten Gewässers 2 ein Luftsammelsystem, beispielsweise Drainageschläuche 3 oder Drainagerohre - das sind gelochte Schläuche oder Rohre - verlegt.

Bei der in Fig.1 dargestellten Ausführungsform wird aus diesem Bodenluft-Sammelsystem mit Hilfe einer Luftpumpe 4 Bodenluft angesaugt, über Leitungen 5, die ebenfalls Schläuche oder Rohre sein können, transportiert und in das Gewässer 2 eingeblasen.

Fig.2 zeigt eine Ausführungsform, wo die Luftansaugung über eine Wasserstrahlpumpe 6 erfolgt, die mit Hilfe des Wasserdruckes einer Wasserpumpe 7 oder des Wasserleitungsnetzes ein Vakuum erzeugt.

Bei beiden dargestellten Ausführungsformen wird die Bodenluft in das zu behandelnde Gewässer direkt eingemischt. Das Vermischen der Bodenluft mit dem Wasser kann jedoch auch in einem Mischbehälter außerhalb des Gewässers stattfinden.

Bei einer weiteren Ausführungsform der Erfindung kann gleichermaßen die Luft aus Kompostmieten angesaugt und mit dem zu behandelnden Wasser vermischt werden. Bei Kompostmieten ist durch die Atmungstätigkeit der Bodenorganismen, die die organischen Verbindungen der Bioabfälle mineralisieren, die CO₂-Konzentration besonders hoch.

Um eine gleichmäßige Verteilung der CO₂-reichen Bodenluft im Wasserkörper zu erzielen, wird die CO₂-reiche Luft aus dem Boden oder aus Kompostmieten vorteilhafterweise durch Linienbelüfter, das sind gelochte Rohre oder Schläuche, die im Gewässer verlegt werden, in das Wasser eingeblasen. Um eine gute Lösung des CO₂ im Wasser zu unterstützen, ist es ferner von Vorteil, Ausströmsteine zu verwenden, das sind poröse Körper, durch die die Luft gepresst wird, um möglichst kleine Luftblasen zu erzeugen.

Einen besonders hohen Lösungsgrad erreicht man durch die Anwendung des Gegenstromprinzips, indem, beispielsweise mittels zumindest einer Pumpe, die CO₂-reiche Luft in einem senkrecht montierten Rohr im Wasserkörper von unten nach oben und gleichzeitig CO₂-armes Wasser von oben noch unten strömt und sich die beiden Ströme vermischen.

Eine Verbesserung des Lösungsgrades lässt sich auch durch den Einbau von Einrichtungen im Gewässer, die das Aufsteigen der CO₂-reichen Luftblasen behindern, erzielen, da dadurch die Aufenthaltszeit des CO₂ im Gewässer verlängert wird. Dazu können im Gewässer beispielsweise Einbauten in der Form von treppenartig angeordneten Platten oder dergleichen, über die die dem Gewässer zugeführte CO₂-reiche Luft nach oben strömt, vorgesehen werden. Einen ähnlichen Effekt erreicht man durch das Durchströmen von im Gewässer untergebrachten porösen Körpern, wie Kiesschüttungen, Schwämmen oder dergleichen. Werden dabei Materialien verwendet, die Nährstoffe wie Phosphor oder Stickstoff binden können, kann man einen zusätzlichen Reinigungseffekt erzielen, da durch die aufsteigende Luft eine Wasserströmung erzeugt wird und beim Durchströmen des porösen Körpers diese Nährstoffe dem Wasser entzogen werden.

Bei einer anderen möglichen Alternative kann der Lösungsgrad durch ein Erzeugen von Turbulenzen durch Rührwerke oder von turbulenten Strömungen erhöht werden. Dies kann innerhalb des Gewässers oder außerhalb in einem gesonderten Behälter erfolgen.

## Patentansprüche

1. Verfahren zur Verminderung des Algenwachstums in natürlichen oder in künstlich angelegten Gewässern, wie Seen, Teichen, Weihern oder Schwimmbecken, durch Einbringen von CO₂, **dadurch gekennzeichnet, dass** im gewässernahen Boden oder in gewässernahen Kompostmieten mittels eines Sammelsystems CO₂ enthaltende Luft aus dem Boden oder aus den Kompostmieten angesaugt wird, welche Luft dem zu behandelnden Wasser zugeführt und mit diesem vermischt wird.

2. Verfahren nach Anspruch 1, **dadurch gekennzeichnet, dass** die Luft aus dem Boden oder aus den Kompostmieten mittels gelochter Drainagerohre oder - schläuche, angesaugt wird.

3. Verfahren nach Anspruch 1 oder 2, **dadurch gekennzeichnet, dass** die Luft mittels einer Luftpumpe (4) oder einer Wasserstrahlpumpe (6) gefördert wird.

4. Verfahren nach Anspruch1 oder 2, **dadurch gekennzeichnet, dass** die Luft mittels einer solarbetriebenen Pumpe gefördert wird.

5. Verfahren nach einem der Ansprüche 1 bis 4, **dadurch gekennzeichnet, dass** die Luft direkt in das Gewässer (2) eingebracht wird.

6. Verfahren nach einem der Ansprüche 1 bis 4, **dadurch gekennzeichnet, dass** die Luft außerhalb des Gewässers mit dem zu behandelnden Wasser gemischt wird.

7. Verfahren nach einem der Ansprüche 1 bis 6, **dadurch gekennzeichnet, dass** entweder gemäß dem Gegenstromprinzip CO₂-reiche Luft und CO₂-armes Wasser in entgegengesetzte Richtungen strömen und dabei vermischt werden oder im Wasser Turbulenzen oder turbulente Strömungen erzeugt werden.

8. Verfahren nach einem der Ansprüche 1 bis 7, **dadurch gekennzeichnet, dass** im Gewässer das Aufsteigen der zugeführten CO₂-reichen Luft verlangsamt wird, beispielsweise durch den Einbau von treppenartigen angeordneten Hindernissen oder durch das Vorsehen von porösen Körpern, wie Kiesschüttungen, Schwämmen oder dergleichen.

9. Vorrichtung zur Durchführung des Verfahrens nach einem oder mehreren der Ansprüche 1 bis 8, **gekennzeichnet durch** ein im Boden und / oder den Kompostmieten verlegbares Luftsammelsystem, insbesondere aus gelochten Drainagerohren oder -schläuchen, zumindest eine Pumpe (4, 6) und Leitungsschläuchen oder -rohren (5), sowie im Gewässer verlegbare Linienbelüfter, insbesondere in Form von gelochten Rohren oder Schläuchen, und/oder poröse Ausströmkörper, beispielsweise poröse Steine oder dergleichen.

## Claims

1. A method for reducing the growth of algae in natural or artificially created bodies of water such as lakes, ponds, meres or swimming pools by the introduction of CO₂,
**characterised in that**
air containing CO₂ in the ground or in compost heaps close to the body of water is suctioned out of the ground or the compost heaps using a collector system and is added to the water to be treated and mixed therewith.

2. The method according to claim 1,
**characterised in that**
the air is suctioned out of the ground or the compost heaps using perforated drainage pipes or hoses.

3. The method according to either of claims 1 or 2,
**characterised in that**
the air is delivered using an air pump (4) or a water jet pump (6).

4. The method according to either of claims 1 or 2,
**characterised in that**
the air is delivered using a solar powered pump.

5. The method according to any of claims 1 to 4,
**characterised in that**
the air is added directly to the body of water (2).

6. The method according to any of claims 1 to 4,
**characterised in that**
the air is mixed with the water to be treated separately from the body of water.

7. The method according to any of claims 1 to 6,
**characterised in that**
either air with high CO₂ content and water with low CO₂ content flow in opposite directions according to the countercurrent principle and are mixed thereby, or turbulences or turbulent flows are created in the water.

8. The method according to any of claims 1 to 7,
**characterised in that**
the rate at which the supplied air with high CO₂ content rises in the body of water is slowed, for example by the installation of obstacles arranged in the manner of steps, or by the provision of porous bodies such as gravel heaps, sponges or similar.

9. A device for performing the method according to one or more of claims 1 to 8,
**characterised by**
an air collector system that is disposable in the ground and/or the compost heaps, particularly consisting of perforated drainage pipes or hoses, at least one pump (4, 6) and supply hoses or pipes (5), and line aerators that are disposable in the body of water, particularly having the form of perforated pipes or hoses, and/or porous outflow bodies, for example porous stones or similar.

## Revendications

1. Procédé pour réduire le développement d'algues dans des cours d'eau naturels ou artificiels tels que des lacs, des étangs, des viviers ou des bassins de natation, par l'introduction de CO₂,
**caractérisé en ce que**
de l'air contenant du CO₂ et provenant du sol ou des silos de compost est aspiré dans le sol proche de cours d'eau ou dans des silos de compost proches de cours d'eau, lequel l'air est amené à l'eau à traiter et mélangé avec celle-ci.

2. Procédé selon la revendication 1,
**caractérisé en ce que**
l'air provenant du sol ou des silos de compost est aspiré au moyen de tuyaux ou de flexibles de drainage perforés.

3. Procédé selon la revendication 1 ou 2,
**caractérisé en ce que**
l'air est transporté au moyen d'une pompe à air (4) ou d'une pompe à jet d'eau (6).

4. Procédé selon la revendication 1 ou 2,
**caractérisé en ce que**
l'air est transporté au moyen d'une pompe à fonctionnement solaire.

5. Procédé selon l'une quelconque des revendications 1 à 4,
**caractérisé en ce que**
l'air est introduit directement dans le cours d'eau (2).

6. Procédé selon l'une quelconque des revendications 1 à 4,
**caractérisé en ce que**
l'air est mélangé à l'extérieur du cours d'eau avec l'eau à traiter.

7. Procédé selon l'une quelconque des revendications 1 à 6,
**caractérisé en ce que**
soit de l'air riche en CO₂ et de l'eau pauvre en CO₂ circulent dans des directions opposées conformément au principe de contre-courant et sont alors mélangés ou bien des turbulences ou des courants turbulents sont générés dans l'eau.

8. Procédé selon l'une quelconque des revendications 1 à 7,
**caractérisé en ce que**
la montée de l'air amené riche en CO₂ est ralentie dans le cours d'eau, par exemple par la mise en place d'obstacles disposés à la façon d'un escalier ou bien par la prévision de corps poreux, tels que des remblais en gravier, des éponges ou similaires.

9. Dispositif pour l'application du procédé selon l'une quelconque ou plusieurs des revendications 1 à 8,
**caractérisé par**
un système collecteur d'air pouvant être posé dans le sol et/ou les silos de compost, en particulier à base de tuyaux ou de flexibles de drainage perforés, au moins une pompe (4, 6) et des flexibles ou tuyaux de conduite (5), ainsi que des aérateurs en ligne pouvant être posés dans le cours d'eau, en particulier sous la forme de tuyaux ou de flexibles perforés, et/ou des corps d'évacuation poreux, par exemple des pierres poreuses ou similaires.
